# NOUVEAU FASCICULE DE BREVET EUROPEEN

(11) **EP 0 548 231 B2**
(45) Date de publication et mention de la décision concernant l'opposition: **23.01.2002**
(45) Mention de la délivrance du brevet: 31.01.1996
(21) Numéro de dépôt: 91917006.8
(22) Date de dépôt: 13.09.1991
(51) Int. Cl.: F16L 55/168, B29C 63/10, B65H 81/08

(54) **PROCEDE DE REPARATION OU DE RESTAURATION D'UNE CANALISATION OU D'UNE ENCEINTE DESTINEE A CONTENIR OU CONTENANT UN FLUIDE SOUS PRESSION, ET DISPOSITIF POUR LA MISE EN OEUVRE DE CE PROCEDE**
VERFAHREN ZUM REPARIEREN ODER SANIEREN EINES ROHRES ODER EINES BEHÄLTERS, DER EIN FLUID UNTER DRUCK ENTHÄLT ODER DAFÜR BESTIMMT IST, UND VORRICHTUNG ZUR DURCHFÜHRUNG DES VERFAHRENS
PROCESS FOR REPAIRING OR RESTORING A PIPE OR CHAMBER FOR RECEIVING OR CONTAINING PRESSURIZED FLUID, AND DEVICE FOR CARRYING OUT SAID PROCESS

(30) Priorité: 14.09.1990 FR 9011377
(43) Date de publication de la demande: 30.06.1993
(73) Titulaire: LABICHE, Jean-Pierre, F-92200 Neuilly-sur-Seine (FR)
(72) Inventeur: LABICHE, Jean-Pierre, F-92200 Neuilly-sur-Seine (FR)
(74) Mandataire: Keib, Gérard
(86) Numéro de dépôt international: FR9100724
(87) Numéro de publication internationale: WO9205383

(56) Documents cités:
- EP-B- 0 060 856
- WO-A-82/01159
- FR-A- 2 398 604
- GB-A- 1 025 319
- US-A- 3 470 057
- US-A- 3 969 812
- US-A- 4 261 785

## Description

La présente invention concerne un procédé pour réparer ou restaurer sur place un tronçon d'une canalisation ou enceinte destinée à contenir ou contenant un fluide sous pression.

La présente invention concerne également un dispositif pour la mise en oeuvre de ce procédé.

On connaît divers procédés pour réparer ou restaurer sur place un tronçon présentant un défaut d'origine et de nature quelconques, corrosion, fissure, enlèvement de matériau, perforation traversante, avec ou sans déformation, etc, sur une canalisation ou enceinte destinée à recevoir un fluide sous pression.

On sait ainsi, par exemple, préparer et assembler solidement l'une à l'autre et sur la canalisation ou enceinte, après avoir le cas échéant réparé le défaut proprement dit et rétabli le profil de celle-ci, deux demi-coquilles conçues pour restaurer la résistance et l'étanchéité de cette canalisation ou enceince. Une telle opération est laborieuse et délicate quand elle est effectuée à la surface du sol ; elle l'est encore beaucoup plus s'il s'agit d'une canalisation ou enceinte posée ou enfouie au fond de la mer.

On connaît par ailleurs divers procédés pour renforcer extérieurement de façon uniforme des éléments de tube ou des récipients cylindriques généralement en acier, avant leur installation ou leur montage.

Selon ces procédés, on fait tourner sur eux-mêmes avant leur assemblage les éléments de tubes ou les récipients individuels, et on enroule autour de toute la surface périphérique de ceux-ci des feuillards ou des fils en acier à haute résistance, ou des profilés flexibles, soit avec, soit sans tension, pour augmenter la résistance des tubes ou des récipients à l'égard des pressions internes et/ou leur résistance aux forces centrifuges.

L'ensemble de ces procédés a pour objet de réaliser des canalisations ou des récipients capables de résister à des pressions internes accrues ou, pour une même pression, de réduire l'épaisseur de métal nécessaire dans un but d'allégement de ceux-ci.

Dans ces procédés, on enroule généralement autour du corps creux un profilé flexible suivant des spires sensiblement jointives, en faisant tourner ledit corps creux sur lui-même et on fixe ce profilé sur ce corps creux. Les profilés utilisés sont constitués par un matériau dont la limite élastique est supérieure à celle du matériau dudit corps creux.

Selon l'un de ces procédés, on applique durant l'enroulement une tension faible sur un profilé constitué de fibres de verre noyées dans une résine synthétique. Ce procédé permet d'obtenir une excellente protection contre la corrosion, les fibres noyées dans la résine synthétique étant solidaires du corps creux renforcé sur toute sa surface. La faible tension appliquée implique, compte-tenu de la différence entre les modules d'élasticité respectifs de l'acier et du verre, qui sont les matériaux les plus couramment utilisés, une expansion hydraulique du corps creux renforcé pour utiliser toute la résistance du verre.

Selon un autre procédé, on enroule un profilé flexible avec une tension suffisante pour que, lorsque le corps creux est mis sous pression, les contraintes susceptibles de s'exercer dans le corps creux et dans les enroulements dudit profile atteignent leur maximum admissible sensiblement en même temps.

Dans tous les cas, le métal est précontraint de façon uniforme sur toute la longueur de la canalisation ou enceinte de façon à être en permanence sollicité sensiblement de la même manière en tout point de celle-ci dans toutes les conditions d'exploitation de celle-ci : construction, essais à la pression d'épreuve, exploitation normale. On est ainsi assuré d'éviter tout gradient de contrainte susceptible d'entraîner une rupture du métal par fatigue.

Ces procédés ne s'appliquent ni à une canalisation ou enceinte installée et en service, ni à une mise en oeuvre localisée sur le site, au niveau du sol ou au fond de la mer, sur un tronçon d'une telle canalisation ou enceinte.

Le document US-A-4 261 785 expose un procédé selon le préambule de la revendication 1, ainsi qu'un dispositif selon le préambule de la revendication 7.

Le but de l'invention est de remédier aux inconvénients des procédés connus et de proposer un procédé du type précité dont la mise en oeuvre soit simple, efficace et économique en tout endroit quelconque d'une installation existante.

Un autre but de l'invention est de proposer un dispositif pour la mise en oeuvre du procédé de l'invention.

Le procédé suivant l'invention est défini dans la revendication 1.

On peut ainsi simplement, en enroulant sous tension, autour d'un tronçon d'une canalisation ou enceinte existante présentant un défaut, un profilé flexible que l'on peut évidemment disposer en plusieurs couches, réaliser sur ce tronçon un renfort localisé présentant la résistance voulue.

Le profilé est ainsi déposé sous tension suivant des hélices successives entrecroisées avec des angles de bobinage prédéterminées : les segments correspondants du profilé exercent sur le matériau du tronçon à réparer une précontrainte à la fois radiale et longitudinale permettant de compenser et au-delà la perte de caractéristiques dudit tronçon provoquée par le défaut à réparer.

Le fait de fondre dans toute sa masse le matériau thermoplastique de la matrice fait que les segments précités se déforment au niveau des entrecroisements pour recouvrir complètement et de façon homogène toute la périphérie dudit tronçon. On refroidit ensuite dès l'application du profilé pour empêcher toute migration des fibres à travers la matrice thermodurcissable.

Le profilé est ainsi bobiné sous la tension prévue qui provoque à son tour la précontrainte précitée, sans détérioration des propriétés du profilé.

Le mérite de la présente invention est précisément d'avoir vaincu le préjugé selon lequel le renforcement d'un corps creux par précontrainte dudit corps creux par enroulement d'un profilé flexible devait être nécessairement continu et homogène pour ne pas introduire dans le matériau dudit corps creux des gradients de contraintes susceptibles d'affaiblir la résistance de ce dernier, et d'avoir analysé les problèmes posés par la réparation d'un défaut pour adapter à cette opération le processus d'enroulement d'un profilé flexible.

On comprendra que le procédé de l'invention peut être mis en oeuvre aisément sur le terrain en tout endroit quelconque d'une installation existante au sol comme au fond de la mer.

Suivant une version avantageuse de l'invention, on presse le profilé sur la paroi périphérique de la canalisation ou enceinte dès qu'il a été appliqué sur ladite paroi ou sur une couche précédemment déposée dudit profilé.

On élimine ainsi toute bulle d'air ou de gaz emprisonnée entre la paroi de la canalisation ou enceinte et les différentes couches superposées du profilé, et on fait légèrement fluer le matériau du profilé pour obtenir une jonction parfaite entre deux segments en contact l'un avec l'autre du profilé, de façon à recouvrir et renforcer complètement et de façon homogène la paroi de la canalisation ou enceinte et à assurer une étanchéité parfaite, ainsi qu'une excellente protection contre la corrosion.

Suivant l'invention, on procède à l'enroulement de façon que la précontrainte exercée sur le matériau de la canalisation ou enceinte diminue progressivement à partir d'un endroit prédéterminé quand on s'éloigne du tronçon réparé ou renforcé de part et d'autre de celui-ci.

On diminue ainsi le gradient local de précontrainte et donc les contraintes internes dues à ce radient, de façon à réduire la fatigue du métal de part et d'autre du tronçon réparé ou renforcé.

Selon un autre aspect l'invention propose un dispositif tel que défini dans la revendication 7:

D'autres caractéristiques et avantages de l'invention apparaîtront dans la description détaillée ci-après.

Aux dessins annexés, donnés à titre d'exemples non limitatifs :
- la figure 1 est une vue schématique partielle de dessus d'un tronçon d'une canalisation présentant un défaut à réparer ;
- la figure 2 est une vue partielle en coupe longitudinale de la canalisation de la figure 1, après réparation, le défaut ne traversant pas la paroi de la canalisation ;
- la figure 3 est une vue semblable à la figure 2, le défaut traversant la paroi de la canalisation ;
- la figure 4 est une vue schématique illustrant le sous-ensemble d'enroulement du profilé flexible autour de la canalisation ;
- la figure 5 est une vue schématique en perspective représentant la mise en oeuvre d'un dispositif selon un premier mode de réalisation de l'invention ;
- la figure 6 est une vue agrandie en perspective du dispositif de la figure 5 ;
- la figure 7 est une autre vue agrandie en perspective d'un autre mode de réalisation du dispositif conforme à l'invention ;
- la figure 8 est une vue semblable à la figure 6 d'un autre mode de réalisation du dispositif de l'invention ;
- la figure 9 est un graphique représentant schématiquement les mouvements possibles selon cinq axes du sous-ensemble d'enroulement par rapport au chariot et au châssis dans un autre mode de réalisation de l'invention ;
- la figure 10 est une vue schématique de face d'une fourche articulée du châssis en position sur une canalisation ayant pour diamètre le diamètre maximal prévu pour cette fourche ;
- la figure 11 est une vue semblable à la figure 10, la fourche étant en position sur une canalisation ayant pour diamètre le diamètre minimal prévu pour cette fourche.

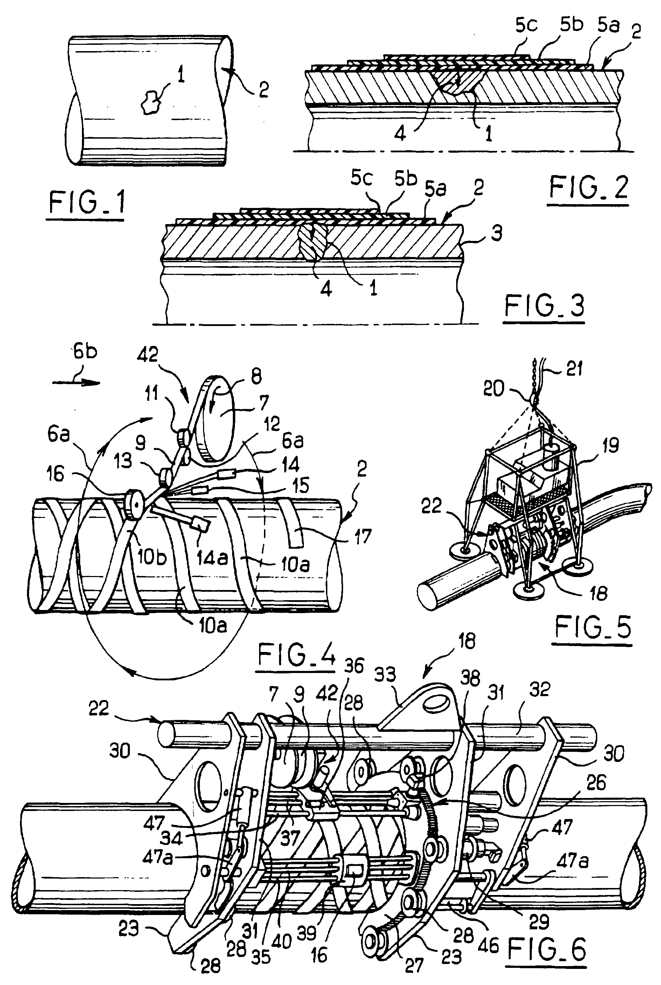

La figure 1 représente un défaut 1 sur une canalisation 2 destinée à contenir ou contenant un fluide sous pression, notamment un gaz sous pression quelconque tel que du gaz naturel par exemple, ou un liquide sous pression quelconque, tel que de l'eau, du pétrole brut, un produit pétrolier, un liquide thermique par exemple. De telles canalisations se rencontrent couramment dans l'industrie du gaz naturel et du pétrole, la chimie, l'industrie nucléaire, le traitement et le transport de la vapeur ou de l'eau chaude, par exemple. Une telle canalisation 2 est généralement en acier. Elle peut être posée sur le sol ou enterrée. Elle peut être posée ou enfouie au fond de la mer ou d'une étendue d'eau quelconque.

Le défaut 1 peut être d'origine et de nature quelconques. Il peut avoir été provoqué par la corrosion, par la fatigue du métal, par un objet contondant extérieur. Il peut ainsi s'agir d'une fissure, d'un évidement du métal, d'une perforation traversant la paroi de la canalisation. Dans ces derniers cas, les bords du défaut peuvent être ou non déformés. Le défaut peut être sur la face externe ou sur la face interne de la canalisation 2.

Une telle canalisation comporte en général un revêtement de protection, en particulier de protection contre la corrosion. Une canalisation sous-marine comporte en outre un revêtement extérieur en béton servant de lestage.

Avant toute réparation d'un défaut, la canalisation est de façon connue préalablement débarrassée de son revêtement de protection, traitée en surface, par exemple par sablage, corroyage, brossage, etc, puis revêtue d'une couche primaire facilitant l'adhérence d'un élément de renforcement, et assurant également une protection contre la corrosion.

Si nécessaire, la canalisation ou enceinte est débosselée par l'intérieur, par exemple au moyen d'une "souris" poussée par la pression du fluide à l'intérieur de cette canalisation ou enceinte pour rétablir le profil intérieur initial de celle-ci. On peut également utiliser tous autres moyens connus tels que vérins, crics, etc..., notamment si les bords du défaut sont déformés vers l'extérieur de la canalisation.

Dans le cas d'une canalisation sous-marine, l'enlèvement du lestage et du revêtement de protection s'effectue en général dans l'eau, puis toutes les opérations de réparation sont de préférence effectuées sous une cloche d'immersion.

On va décrire ci-dessous l'invention dans le cas d'une canalisation, étant bien précisé que tout ce qui va être décrit en référence à cette canalisation peut être appliqué à une enceinte quelconque sous pression qui n'a pas besoin d'avoir nécessairement une forme de révolution. La forme de révolution est toutefois préférée en ce qu'elle autorise un renforcement régulier et homogène, une autre forme imposant d'utiliser des coefficients de sécurité supplémentaires pour compenser les irrégularités et défauts d'homogénéité. On fait également l'hypothèse que ladite canalisation est en acier, étant bien entendu que l'invention est applicable et peut être aisément adaptée à une canalisation ou enceinte réalisée en un matériau quelconque, par exemple en béton.

Le procédé de l'invention peut être mis en oeuvre sur une canalisation ou enceinte en service ou sous pression dès lors que le tronçon à réparer ou restaurer ne comporte aucun défaut traversant l'épaisseur de celle-ci. Cette canalisation ou enceinte doit avoir un diamètre extérieur de préférence supérieur à 100 mm environ.

Le procédé pour réparer ou restaurer sur place un tronçon d'une canalisation destinée à contenir ou contenant un fluide sous pression, comporte les étapes suivantes :
a) si nécessaire, on obture tout défaut quelconque éventuel dudit tronçon au moyen d'un matériau d'obturation ;
b) on fixe par rapport à la surface périphérique extérieure de la canalisation ou enceinte l'extrémité antérieure d'un profilé flexible de très haute résistance mécanique longitudinale constitué de fibres longitudinales continues, représentant en section transversale de 30 à 60 % de la section du profilé, enrobées dans une matrice thermoplastique, et dont la limite élastique est supérieure à celle du matériau de la canalisation ou enceinte ;
c) on fait tourner autour de la canalisation ou enceinte, et on déplace axialement le long de celle-ci, suivant un mouvement de va-et-vient d'un bout à l'autre dudit tronçon et au-delà, des moyens pour amener le profilé flexible :
d) on enroule sous tension suivant des hélices successives entrecroisées avec des angles de bobinage prédéterminés ledit profilé flexible autour de la canalisation ou enceinte, à l'endroit et au voisinage dudit tronçon de part et d'autre de celui-ci, en chauffant ledit profilé de façon à faire fondre sensiblement dans toute sa masse le matériau thermoplastique de la matrice du profilé juste avant que ce dernier ne soit appliqué sur ladite paroi périphérique ou sur une couche précédemment déposée dudit profilé, et en refroidissant immédiatement ledit profilé dès son application pour resolidifier ladite matrice, et on constitue ainsi des couches homogènes sur toute la surface dudit tronçon ;
e) le nombre de couches du profilé superposées en un même endroit ainsi que les angles et la tension d'enroulement du profilé étant suffisants pour précontraindre à la fois radialement et longitudinalement le matériau de la canalisation ou enceinte, et pour redonner ainsi audit tronçon de la canalisation
ou enceinte des caractéristiques mécaniques prédéterminées.

De préférence, ces caractéristiques mécaniques prédéterminées sont au moins égales à celles prévues lors de la conception de la canalisation.

De façon connue, après réparation et obturation éventuelle du (ou des) défaut(s), on procède aux opérations habituelles de surfaçage de la zone réparée, et de dépôt d'un revêtement primaire servant à la fois de couche d'accrochage et de couche anti-corrosion.

On procède à l'enroulement de façon que la précontrainte exercée sur le matériau de la canalisation diminue progressivement à partir d'un endroit prédéterminé quand on s'éloigne du tronçon réparé ou renforcé de part et d'autre de celui-ci.

Le matériau d'obturation peut déborder radialement vers l'extérieur par rapport à la surface périphérique extérieure de la canalisation.

Lorsqu'on applique le profilé sur une couche précédemment déposée, cette couche est elle-même de préférence fondue superficiellement.

Enfin, on presse le profilé sur la paroi périphérique de la canalisation dès qu'il a été appliqué sur ladite paroi
ou sur une couche précédemment.déposée dudit profilé.

Le nombre de couches du profilé superposées en un même endroit ainsi que les angles et la tension d'enroulement du profilé doivent être suffisants pour que le matériau d'obturation et/ou le matériau dudit tronçon de la canalisation soient précontraints lorsque la pression du fluide à l'intérieur de celle-ci est égale à la pression d'épreuve. Cependant, le profilé et notamment les fibres le composant ne seront soumis qu'à un niveau de contrainte tel qu'aucune relaxation perceptible n'intervienne dans le temps. Dans le cas du verre, la tension appliquée aux fibres n'excédera pas 40 % environ de leur résistance à la rupture.

Les différents segments de profilé en hélice peuvent être appliqués avec un même angle ou avec plusieurs angles de bobinage, déterminé(s) de façon à assurer la précontrainte voulue tant en direction radiale qu'en direction longitudinale.

Dans ces conditions, on maintient un état de compression ou de précontrainte qui permet de restaurer l'étanchéité et la résistance de la canalisation à la pression interne tout en la protégeant de la corrosion et des agressions de l'environnement.

En effet, on comprend aisément, et le calcul confirme, que sous une telle précontrainte, une fissure du métal de la canalisation se referme et reste fermée. De même, un bouchon obturant un trou traversant ou non l'épaisseur de la canalisation est d'une part maintenu en place par les diverses couches de profilé, d'autre part comprimé par le métal situé à la périphérie du trou et soumis à cette précontrainte. Enfin, pour chaque couche, les spires jointives liées l'une à l'autre par la fusion superficielle de la face intérieure du profilé avant dépôt constituent une enveloppe étanche.

Il est ainsi possible de renforcer localement une canalisation dont la paroi a été partiellement entamée ou même percée.

Enfin, pour assurer une transition absolument sans risque entre la canalisation saine, dans laquelle la contrainte en service est une traction, et le tronçon réparé ou restauré, dans lequel la contrainte en service est en général une compression, on réalise de part et d'autre du tronçon à réparer proprement dit des tronçons de transition d'une certaine longueur prédéterminée sur lesquels on réalise une précontrainte qui diminue progressivement quand on s'éloigne du tronçon réparé ou restauré. Il est possible de calculer les valeurs de cette précontrainte et la longueur sur laquelle elle diminue pour que les contraintes internes du métal dans ces tronçons de transition restent à des niveaux supportables par le métal sans le moindre risque pour celui-ci.

Il est à noter que l'adhérence excellente et rapide du profilé à la canalisation ou à une couche précédemment déposée permet de diminuer facilement la tension d'enroulement à chacune des extrémités de chaque segment de profilé déposé en hélice à chaque aller ou retour axial des moyens d'enroulement (voir ci-dessous).

Dans le cas où le tronçon à réparer ou à restaurer est contigu à un accessoire de la canalisation tel que vanne, renfort ou analogue, d'une épaisseur supérieure à celle de la canalisation, la transition peut être réalisée par un enroulement mourant sur ledit accessoire de plus forte épaisseur.

On peut évidemment, à cet effet, jouer en même temps ou séparément sur le nombre de couches du profilé et la tension de celui-ci, qui peuvent diminuer progressivement au fur et à mesure que l'on s'éloigne du tronçon réparé ou restauré.

Dans les réalisations représentées respectivement aux figures 2 et 3, les défauts 1 dont l'un, figure 3, traverse la paroi 3 de la canalisation 2 alors que l'autre, figure 2, ne la traverse pas- sont obturés par un bouchon 4.

Le bouchon 4 est réalisé d'une manière connue quelconque : ce peut être du métal d'apport déposé par soudure électrique, par exemple. Ce peut être aussi un bouchon en résine synthétique ou en tout autre matériau compatible avec le métal de la canalisation 2.

Le bouchon 4 est recouvert de trois couches de renfort 5a, 5b, 5c, qui seront décrites plus loin.

Dans la réalisation de la figure 4, un sous-ensemble d'enroulement 42, monté sur un équipage mobile non représenté pour la clarté du dessin, tourne autour de la canalisation 2, dans le sens indiqué par la flèche 6a, et se déplace en même temps parallèlement à la canalisation 2 de la gauche vers la droite du dessin dans le sens de la flèche 6b pour déposer un second segment en hélice 10b. Ce sous-ensemble d'enroulement 42 s'est auparavant déplacé de la droite vers la gauche du dessin pour déposer un premier segment en hélice 10a, que croise le segment 10b, les angles de bobinage respectifs des segments 10a, 10b étant opposés. Dans le déplacement suivant vers la gauche, le sous-ensemble 42 déposera un nouveau segment décalé par rapport au segment 10a et qui croisera le segment 10b.

On pourrait également, en variante, déposer une première couche homogène de segments en hélice parallèles tels que 10a, en bobinant pendant les déplacements du sous-ensemble 42 dans un seul sens, puis déposer une seconde couche homogène de segments parallèles tels que 10b, en bobinant pendant les seuls déplacements dans l'autre sens.

Le sous-ensemble d'enroulement 42 comporte :
- une bobine freinée 7 qui tourne dans le sens de la flèche 8 quand le sous-ensemble d'enroulement 42 tourne dans le sens de la flèche 6a. La bobine 7 porte un profilé flexible 9 qui se déroule de la bobine et s'enroule autour de la conduite 2 pour former des segments consécutifs en hélice entrecroisés 10a, 10b;
- un groupe de deux galets 11, 12 entre lesquels le profilé flexible 9 est serré et freiné. Ces deux galets sont par exemple revêtus de téflon à leur périphérie ; ils règlent la tension d'enroulement du profilé flexible 9;
- un guide d'angle 13, qui définit la direction suivant laquelle le profilé 9 est appliqué sur la canalisation 2. Le guide d'angle 13 peut être, par exemple, une roulette ou un rouleau revêtu(e) à sa périphérie de téflon, ou une barre soit fixe soit tournante. Le guide d'angle 13 présente à sa périphérie une gorge concave qui reçoit le profilé 9 et dont la concavité est tournée vers l'extérieur. Le guide d'angle 13 est en particulier utilisé pour adapter le sous-ensemble d'enroulement 42 à des canalisations de diamètres différents.
- des moyens 14 pour chauffer et faire fondre sensiblement dans toute sa masse le matériau thermoplastique de la matrice du profilé flexible 9 juste avant que ledit profilé ne soit appliqué sur ladite paroi périphérique de la canalisation 2 ou une couche précédemment déposée du profilé, ainsi que pour chauffer ladite canalisation ou couche : il s'agit par exemple d'un dispositif de chauffage électrique ou d'un chalumeau à flamme réductrice, du type oxyacétylénique, si l'opération doit s'effectuer à l'air libre,
ou d'un dispositif de chauffage électrique ou d'un chalumeau à gaz chaud fonctionnant si nécessaire sous une cloche d'immersion renfermant un gaz de préférence non oxydant si l'opération doit s'effectuer en immersion. Le profilé adhère ainsi très bien à ladite paroi ou couche.
- des moyens 14a pour refroidir si nécessaire le profilé 9 dès son application, afin de resolidifier la matrice thermoplastique. Il s'agit par exemple d'un soufflage d'air froid. Il est entendu que sur un tronçon de conduite de transport de gaz sous pression dont la température est par exemple de - 10°C, l'utilisation de moyens de refroidissement est inutile.
- des moyens 15 de mesure de la température de l'endroit de la surface périphérique de la canalisation 2, éventuellement déjà recouvert d'une ou de plusieurs couches du profilé, sur lequel va être déposé le profilé, et des moyens (non représentés) pour régler la puissance de chauffe des moyens de chauffage 14 en fonction de la température mesurée de manière à assurer les conditions d'une adhérence optimale du profilé sur ladite surface périphérique ou sur le profilé précédemment déposé recouvrant celle-ci. Il s'agit par exemple d'une sonde de température d'un type quelconque.
- des moyens 16, par exemple un galet ou un rouleau téfloné, indépendants du système de régulation de la tension d'enroulement, pour presser le profilé flexible 9 contre la paroi périphérique de la canalisation 2 juste après l'application dudit profilé 9 sur ladite paroi. Cette pression fait légèrement fluer le matériau de la matrice, ce qui lie les spires adjacentes entre elles et assure l'étanchéité de la canalisation.

Il est à noter que le guide d'angle 13 peut être situé soit dans la zone de chauffe du profilé 9, soit dans la zone froide située en amont de la zone de chauffe par rapport au sens de défilement du profilé. Le guide d'angle 13 et les moyens de chauffe 14 sont réglables pour pouvoir être adaptés aux conditions d'enroulement et en particulier au diamètre de la canalisation 2.

On règle la vitesse du déplacement longitudinal du sous-ensemble 42 le long de la canalisation 2 en fonction de l'angle de bobinage que l'on veut obtenir.

Le profilé flexible 9 de très haute résistance mécanique longitudinale est constitué de fibres longitudinales continues enrobées dans une matrice. La matrice peut être métallique, par exemple en aluminium, les fibres étant par exemple en acier. La matrice peut également et de préférence être en résine synthétique thermoplastique, les fibres étant par exemple des fibres de verre, de carbone, d'aramide, etc... Les fibres sont choisies pour que le profilé 9 ait une limite élastique supérieure à celle de l'acier de la canalisation 2. Le point de fusion et/ou le point de transition vitreuse de la matrice utilisée sont dans tous les cas inférieurs d'au moins 50 K respectivement à ceux des fibres. On utilise en général un profilé dans lequel la section des fibres représente, en section transversale, de 30 à 60 %, de préférence de 40 à 50 % de la section du profilé.

Avant de procéder à l'enroulement, on fixe en 17 d'une manière connue quelconque, par exemple par collage, l'extrémité de départ du profilé flexible 9 sur la paroi périphérique de la canalisation 2. Cette extrémité peut également être maintenue en place par les moyens 16 pour presser le profilé ou par la première spire enroulée du profilé.

Tout ce qui a été dit ci-dessus pour le dépôt d'une première couche telle que 5a sur la surface extérieure d'une canalisation 2 est entièrement valable pour le dépôt d'une seconde couche 5b sur la couche 5a, puis pour le dépôt d'une troisième couche 5c sur la couche 5b : le matériau fondu du profilé de la nouvelle couche adhère parfaitement sur le matériau du profilé de la couche précédente, et l'étanchéité de la nouvelle couche est assurée par la pression du galet 16, de même que l'élimination de toute inclusion.

Comme représenté en détail aux figures 2 et 3, la couche inférieure 5a recouvre une longueur de la canalisation 2 supérieure à celles que recouvrent respectivement les couches successives 5b, 5c, de façon que la précontrainte exercée sur le matériau de la canalisation ou enceinte diminue progressivement à partir d'un endroit prédéterminé, quand on s'éloigne du défaut 1 de part et d'autre de celui-ci.

Dans la réalisation de la figure 5, un dispositif conforme à un premier mode de réalisation de l'invention et indiqué d'une manière générale par le numéro de référence 18, est suspendu à un support 19 destiné à prendre appui sur le sol (ou sur le fond marin). Le support 19 peut lui-même être suspendu au crochet 20 d'un engin de levage non représenté et reçoit par un flexible 21 relié à une centrale d'actionnement au sol (ou en surface pour une conduite sous-marine) tous les fluides et toutes les informations nécessaires à l'actionnement du dispositif 18. Le support 19 comporte tous les éléments, projecteurs, caméras, capteurs, etc, (non représentés) permettant une télécommande du dispositif 18 et un contrôle de l'enroulement obtenu, en particulier dans le cas d'une conduite sous-marine. Dans ce dernier cas, le support 19 peut être également agencé de facon à servir de cloche d'immersion (non représentée).

Comme représenté en détail à la figure 6, le dispositif 18 comporte :
- un châssis 22 destiné à prendre appui sur la canalisation 2 et si nécessaire sur le sol,
- des moyens 30, 31, pour fixer le châssis 22 sur la canalisation 2 et le centrer par rapport à celle-ci,
- un équipage 26 mobile par rapport au châssis 22 et destiné à tourner par rapport au châssis 22 autour de la canalisation 2,
- des moyens 27, 28, 29 pour faire tourner l'équipage mobile 26 autour de la canalisation 2 ;
- l'équipage mobile 26 comportant un sous-ensemble d'enroulement 42 pour amener et pour enrouler sous tension un profilé flexible 9 autour de la canalisation 2 lorsque l'équipage mobile 26 tourne autour de cette dernière.

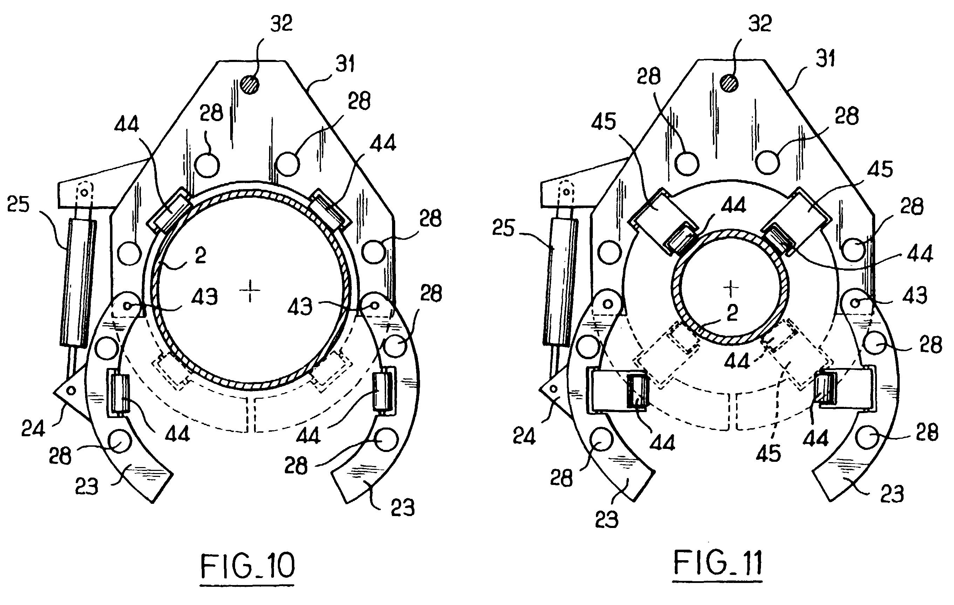

Dans l'exemple représenté, le châssis 22 est constitué par deux étriers d'appui 30 solidaires respectivement de l'une de deux fourches articulées 31, et reliés par une traverse 32 portant une chape 33 de suspension, au support 19 de la figure 5 par exemple. Les fourches articulées 31 comportent chacune deux bras articulés 23 qui se referment autour de la canalisation 2 sous l'action de manivelles ou chapes 24 actionnées par des vérins 25 pour fixer le châssis 22 sur la canalisation 2. (Voir figures 10 et 11).

Comme représenté en détail aux figures 10 et 11, ces bras 23 peuvent s'ouvrir et se fermer pour permettre l'engagement et le dégagement des fourches 31 par rapport à la canalisation 2.

Dans leur position ouverte représentée en traits pleins, les vérins 24, dont un seul est représenté pour la clarté du dessin, sont en position rétractée et les bras 23 sont pivotés vers l'extérieur autour de leur axe d'articulation respectif 43 de façon à permettre la mise en place de la fourche 31 sur la conduite 2. Le déplacement des vérins 25 oblige les bras 23 à pivoter vers leur position fermée représentée en tirets. Dans cette position fermée, des mors d'accrochage 44 prévus sur la fourche 31 et sur les bras 23, sont en contact avec la canalisation 2. Ces mors 44 peuvent être fixés sur la fourche 31 et sur les bras 23, et le centrage de la fourche 31 sur la canalisation se fait alors par équilibrage des pressions sur les vérins 25 de manoeuvre des bras 23. Ces mors 44 peuvent également être montés sur des supports télescopiques représentés schématiquement en 45 à la figure 11 et dirigés radialement par rapport à la canalisation 2 : ces supports permettent alors d'adapter la fourche 31 et le dispositif 18 sur une canalisation de diamètre extérieur nettement inférieur au diamètre intérieur de la fourche 31, le centrage se faisant également par équilibrage des pressions sur lesdits supports 45.

Ces mors 44, dont la surface en contact avec la canalisation est avantageusement rendue rugueuse d'une manière connue quelconque, par exemple par moletage ou par crantage, pour bien immobiliser la fourche 31 et le dispositif 18 sur la canalisation 2, peuvent être remplacés par des galets permettant au dispositif de rouler le long de la canalisation, comme on le verra plus loin. On peut également utiliser avantageusement des mors à chaînes.

Le dispositif 18 de la figure 6 comporte également, entre l'étrier 30 et la fourche 31 adjacente, des mâchoires de blocage 46 pivotantes serrées chacune contre la canalisation 2 par un vérin 47 et une manivelle 47a.

L'équipage mobile 26 comporte deux rails de guidage 27 présentant un bord radialement extérieur en forme d'arc de cercle et associés respectivement aux faces en regard l'une de l'autre des deux fourches 31 du dispositif 18. Chacun de ces bords extérieurs est une crémaillère qui s'appuie et engrène en même temps sur plusieurs galets 28 appartenant à un ensemble de galets dentés 28 montés sur la fourche 31 et dont certains au moins sont des galets moteurs entraînés par des moteurs régulés 29, par exemple des moteurs hydrauliques, fixés sur la fourche 31 correspondante. Les galets 28 sont répartis sensiblement régulièrement sur la fourche 31 proprement dite et sur les bras 23 de façon que le rail de guidage 27 soit en permanence en contact avec au moins deux galets 28 qui l'entraînent dans son mouvement de rotation autour de la canalisation.

Le rail de guidage 27 est à cet effet muni de moyens quelconques connus en eux-mêmes pour le maintenir sur sa trajectoire en contact avec les galets 28, par exemple un autre rail de guidage ou des tronçons de rail de guidage montés en porte-à-faux et s'appuyant sur d'autres galets (non représentés) fixés sur la fourche 31.

Le bord extérieur du rail de guidage 27 et les galets 28 peuvent être lisses, en particulier pour des canalisations de diamètre relativement petit : la pression des galets 28 sur ce bord suffit alors pour entraîner le rail de guidage 27 et l'équipage mobile 26 en rotation autour de la canalisation 2.

Les rails de guidage 27 sont reliés l'un à l'autre par plusieurs paires de glissières longitudinales 34, 35.

Un chariot 36 est mobile dans la direction longitudinale de la canalisation 2 sur les deux glissières 34 sous l'action d'une vis à bille 37 commandée par un moteur 38 à deux sens de marche. Le chariot 36 porte le sous-ensemble d'enroulement 42 déjà décrit ci-dessus en référence à la figure 4, dont seule la poulie 7 est représentée sur la figure pour des raisons de clarté du dessin.

On règle la vitesse de la vis en fonction de l'angle de bobinage que l'on veut obtenir.

De même un chariot 39 mobile sur les deux glissières 35 sous l'action d'une vis à bille 40 porte un rouleau presseur 16 déjà décrit en référence à la figure 4, ce rouleau 16 complétant l'action de celui qui fait partie du sous-ensemble de roulement 42 porté par le chariot 36, ou pouvant le remplacer.

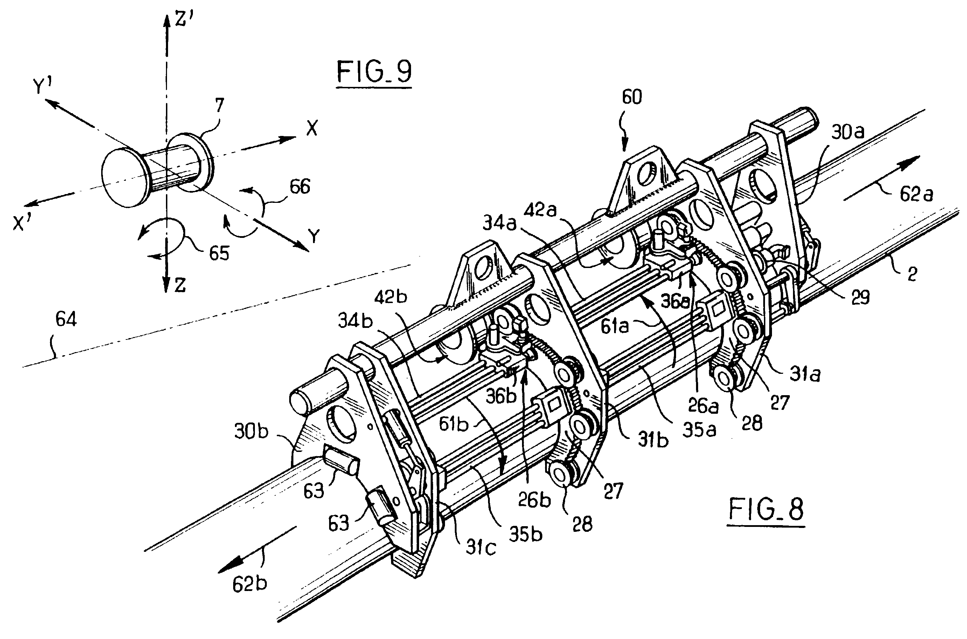

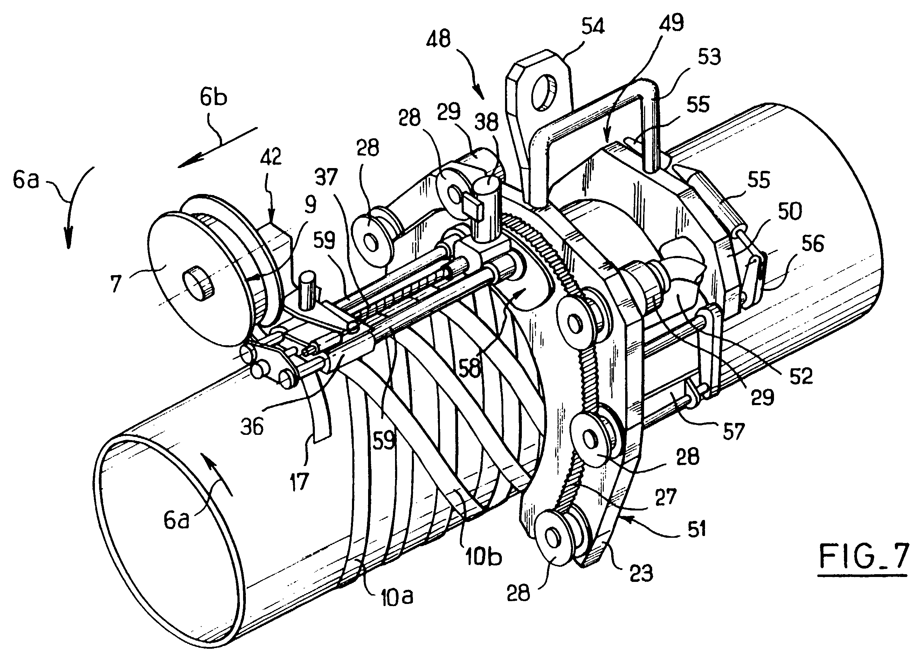

Dans la réalisation représentée à la figure 7, les éléments identiques à ceux décrits ci-dessus en référence aux figures 4 et 6 portent les mêmes numéros de référence que ceux-ci.

Dans cette réalisation, le dispositif 48 comporte un châssis 49 constitué par un étrier d'appui 50 et une fourche articulée 51, reliés l'un à l'autre par des entretoises de centrage 52, une traverse 53 et une chape de suspension 54. L'étrier 50 porte des vérins 55 qui actionnent, par l'intermédiaire de manivelles 56, des mâchoires de blocagé 57, lesquelles s'appliquent avec force sur la canalisation 2 pour fixer sur celle-ci le dispositif 48. La fourche 51 est sensiblement identique à la fourche 31 de la figure 6, et comporte en particulier deux bras articulés 23 qui se referment autour de la canalisation 2. L'équipage mobile 58 comporte un seul rail de guidage 27 dont le bord extérieur en forme d'arc de cercle et formant crémaillère s'appuie sur un ensemble de galets dentés 28 répartis sensiblement régulièrement sur la fourche 51 et ses bras 23 et tangents extérieurement à la crémaillère 27.

Les deux glissières longitudinales 59 sont montées en porte-à-faux sur le rail de guidage 27, et supportent le chariot 36 mobile le long de celles-ci sous l'action de la vis 37. Le chariot 36 porte le sous-ensemble d'enroulement 42 dont on n'a représenté que la bobine freinée 7 pour la clarté du dessin.

Dans la réalisation représentée à la figure 8, le dispositif 60 correspond sensiblement à deux dispositifs tels que 18 disposés l'un derrière l'autre dans la direction longitudinale de la canalisation 2.

Deux équipages mobiles 26a, 26b, sont susceptibles de tourner respectivement entre les fourches 31a et 31b d'une part, 31b et 31c d'autre part. Les galets 28 qui engrènent sur la crémaillère du rail de guidage 27 correspondant ont des moteurs 29 à deux sens de marche. Il est donc possible de faire tourner les deux équipages mobiles autour de la canalisation 2 soit dans le même sens, soit de préférence dans des sens opposés repérés respectivement par les flèches 61a et 61b : dans ce dernier cas, les forces de réaction appliquées respectivement au dispositif 60 du fait de la rotation des équipages mobiles 26a et 26b s'équilibrent sensiblement l'une l'autre, de sorte que le dispositif 60 n'a pas tendance à tourner autour de la canalisation 2. La disposition du sous-ensemble d'enroulement 42b sur le chariot 36b de l'équipage mobile 26b est bien entendu adaptée au sens de rotation de ce dernier (flèche 61b).

Le dispositif 60 est susceptible de se déplacer par ses propres moyens dans la direction longitudinale de la canalisation 2, soit dans le sens de la flèche 62a, soit dans le sens opposé indiqué par la flèche 62b.

A cet effet, les étriers 30a, 30b et/ou les fourches 31a, 31b, 31c, du dispositif 60 comportent des galets tels que 63 entraînés par des moteurs non représentés, qui servent à la fois à maintenir le dispositif 60 en place sur la canalisation 2 et à le déplacer longitudinalement sur celle-ci. Ces galets 63 peuvent être montés sur des supports à ressort ou sur des supports télescopiques déjà décrits ci-dessus en référence aux figures 10 et 11.

Bien entendu, les galets 63 peuvent ne pas être moteurs, le dispositif 60 étant déplacé le long de la canalisation 2 par des moyens quelconques extérieurs au dispositif 60.

Enfin, le dispositif de l'invention peut également servir à renforcer ou restaurer un tronçon de la canalisation qui peut comporter des coudes. Ces coudes sont, par rapport au plan médian de la canalisation, défini par l'axe et le diamètre horizontal de celle-ci au point de départ du coude, soit des coudes vers la droite ou vers la gauche, soit des coudes vers le haut ou vers le bas, soit des combinaisons des coudes précédents.

Pour optimiser les conditions d'enroulement du profilé autour de coudes de la canalisation, le sous-ensemble d'enroulement 42 est monté sur le chariot 36 de façon à être mobile par rapport à ce dernier suivant cinq axes : un tel montage, connu en soi, est représenté schématiquement à la figure 9. Sur cette figure, on a représenté l'axe 64 de la canalisation 2 et le sous-ensemble d'enroulement schématisé par la bobine 7 dont l'axe de rotation X-X' est sensiblement parallèle à l'axe 64. L'axe Y-Y' correspond au diamètre horizontal de la bobine 7 perpendiculaire à l'axe X-X', et l'axe Z-Z' est perpendiculaire aux deux axes X-X' et Y-Y'.

Le sous-ensemble d'enroulement doit ainsi pouvoir se déplacer par rapport au chariot (non représenté) suivant chacun des trois axes X-X', Y-Y', Z-Z' et pouvoir tourner autour de l'axe Z-Z' (flèche 65) pour les coudes vers la gauche et vers la droite, et autour de l'axe Y-Y' (flèche 66) pour les coudes vers le haut et vers le bas, ainsi que dans les sens opposés respectifs.

On peut ainsi monter le sous-ensemble d'enroulement par rapport au chariot de la même façon que l'on monte un poignet de robot par rapport au corps de ce robot, les différents mouvements étant commandés et coordonnés par un ordinateur. Un tel sous-ensemble est adaptable à l'un quelconque des modes de réalisation du dispositif de l'invention.

D'une manière générale, les mouvements des éléments solidaires des étriers 30, 50 et/ou des fourches 31, 51 sont commandés par exemple hydrauliquement : cela concerne les moteurs 29 des galets 28, les vérins 25 d'actionnement des bras articulés, les vérins 47, 55 d'actionnement des mâchoires de blocage 46, 57; les supports télescopiques 45 des mors 44, etc.

L'énergie utilisée sur l'équipage mobile 26, 58, est de préférence électrique et est par exemple prélevée par l'intermédiaire de frotteurs isolés (non représentés) portés par l'un des rails 27 et frottant sur deux rails isolés sous tension (non représentés) portés par la face adjacente de la fourche 31 correspondante : cela concerne en particulier les vis 37, 40 actionnant les chariots 36, 39, l'actionnement du chalumeau à gaz chaud 14, etc.

On va maintenant décrire en référence aux figures le mode de fonctionnement des divers modes de réalisation précités du dispositif de l'invention.

Pour ce qui concerne le dispositif 18 de la figure 6, on l'amène sur la canalisation au moyen d'un engin de levage quelconque, par exemple le support 19, et on le fixe sur la canalisation 2 au moyen des mâchoires 46 et des mors 44 ; les moteurs 29 actionnent les galets 28, lesquels entraînent les rails de guidage 27 et l'équipage mobile 26 en rotation autour de la canalisation. On déplace en même temps et de façon coordonnée le chariot 36 le long des glissières 34 sur toute la longueur de celles-ci pour déposer une première couche de profilé telle que la couche 5a des figures 2 et 3, couvrant une zone dont la longueur est au plus égale à celle des glissières 34.

Ce qui précède s'applique également au dispositif 48 de la figure 7.

Le dispositif 60 de la figure 8 est particulièrement adapté à la réalisation d'un renfort sur une longueur importante d'une canalisation. Il peut comporter plus de deux équipages mobiles 26 tournant alternativement dans un sens et dans l'autre pour déposer en même temps, à l'avancement, un nombre de couches du profilé égal au nombre d'équipages mobiles. Le dispositif 60 se déplace normalement le long de la conduite, les chariots 36 étant fixes sur les glissières longitudinales.

On a ainsi décrit un procédé et un dispositif qui sont les seuls à permettre de réaliser des réparations sur les réseaux primaires haute pression de transport de fluides tels que, par exemple, des produits pétroliers ou du gaz naturel.

Bien entendu, l'invention n'est pas limitée aux modes de réalisation que l'on vient de décrire, et on peut apporter à ceux-ci de nombreux changements et modifications sans sortir du domaine de l'invention.

On peut ainsi remplacer les étriers 30, 50, les fourches articulés 31, 51, les glissières longitudinales 34, 35, 59, les vis à bille 37, 40, les bras 23, les vérins 25, 55, les mors d'accrochage 44, les supports télescopiques 45, les mâchoires 46, etc, et d'une manière générale tous les éléments constitutifs des dispositifs décrits, par des moyens équivalents remplissant des fonctions comparables. On peut également associer différemment ces éléments pour remplir les différentes fonctions décrites ci-dessus de fixation et déplacement du dispositif le long de la canalisation, rotation de l'équipage mobile par rapport au châssis et à la canalisation, déplacement du chariot par rapport au châssis.

De même, le dispositif 60 de la figure 8 peut être équipé d'équipages mobiles 26a, 26b ne comportant pas de glissières 34a, 34b, 35a, 35b : les chariots 36a, 36b peuvent être fixés au rail de guidage 27 correspondant.

Au contraire, chaque équipage mobile tel que 26 ou 58 peut comporter plusieurs chariots portant chacun un sous-ensemble d'enroulement, ou un chariot unique portant plusieurs sous-ensembles d'enroulement tels que 42, de façon à enrouler en même temps plusieurs profilés.

On peut également concevoir, pour des tracés sinueux de canalisation, des châssis individuels, portant chacun un équipage mobile, articulés l'un par rapport à l'autre pour permettre l'enroulement de plusieurs couches à l'avancement, même pour des tracés sinueux.

On peut également adapter les dispositifs décrits à des systèmes formant cloche de plongée pour permettre la mise en oeuvre de l'invention hors d'eau sur des canalisations sous-marines. Dans de telles conditions, le dispositif peut être adapté à un fonctionnement automatique, télécommandé. Ainsi, la bobine 7 peut comporter un moteur pour amener le profilé, et le sous-ensemble d'enroulement peut comporter des guides pour amener le profilé entre les galets de freinage, devant le chalumeau et jusqu'à la canalisation, ainsi qu'une guillotine pour pouvoir couper le profilé en cas d'incident et recommencer le processus d'enroulement dans de bonnes conditions.

Il est possible de monter sur le chariot 36, à la place ou à côté du sous-ensemble d'enroulement 42, des sous-ensembles permettant d'autres opérations telles que l'apport de matériau d'obturation, le surfaçage de ce matériau après dépôt, l'application du revêtement primaire d'accrochage, l'enlèvement des matériaux de protection ou de lestage initiaux avant réparation, etc...

D'une manière générale, le dispositif de l'invention peut être entièrement supporté par la canalisation ou enceinte à réparer. Il peut au contraire être suspendu à un engin porteur tel que 19 (figure 5) lequel peut être lui-même immobile ou au contraire être automoteur, ses pieds étant par exemple munis de chenille ou de roues. Le dispositif de l'invention pourrait également reposer sur le sol par l'intermédiaire de moyens propres d'appui tels que des pieds réglables, le cas échéant munis de moyens de déplacement tels que des roues ou des chenilles pour rendre le dispositif automoteur.

Enfin, tout ce qui précède concerne l'enroulement hélicoïdal d'un profilé en segments en hélice successifs. Le procédé et le dispositif de l'invention peuvent également utiliser un autre processus d'enroulement permettant de recouvrir complètement une surface sensiblement cylindrique : ils peuvent ainsi utiliser un processus dans lequel une ou plusieurs bobines sont stockées sur la canalisation à recouvrir sans tourner autour de celle-ci : les profilés correspondants sont amenés longitudinalement jusqu'à un équipage mobile qui tourne alternativement dans un sens puis dans l'autre, chaque fois de plus d'un tour, afin de recouvrir complètement en une ou plusieurs passes toute la surface de la canalisation : plusieurs équipages mobiles peuvent également être utilisés en même temps pour poser plusieurs couches l'une au-dessus de l'autre dans la même opération.

## Revendications

1. Procédé pour réparer ou restaurer sur place un tronçon d'une canalisation ou enceinte (2) destinée à contenir ou contenant un fluide sous pression, comportant les étapes suivantes :
a) on fixe par rapport à la surface périphérique extérieure de la canalisation ou enceinte (2) l'extrémité antérieure (17) d'au moins une bande flexible (9) ;
b) on fait tourner autour de la canalisation ou enceinte (2), et on déplace axialement le long de celle-ci, suivant un mouvement de va-et-vient en cas de bande unique, d'un bout à l'autre dudit tronçon et si besoin au-delà, des moyens (7)pour amener la bande flexible (9) afin d'enrouler ladite bande autour de la canalisation ou enceinte (2), et on enroule sous tension suivant des hélices successives avec des angles de bobinage prédéterminés ladite bande (9) autour de la canalisation ou enceinte (2), à l'endroit et au voisinage dudit tronçon de part et d'autre de celui-ci ;
**caractérisé en ce qu'**il comporte en outre les étapes suivantes :
c) si nécessaire, on obture tout défaut quelconque éventuel (1) dudit tronçon au moyen d'un matériau d'obturation ;
d) on utilise comme bande flexible un profilé flexible (9) de très haute résistance mécanique longitudinale constitué de fibres longitudinales continues, représentant en section transversale de 30 à 60% de la section du profilé, enrobées dans une matrice métallique ou en résine thermoplastique, et dont la limite élastique est supérieure à celle du matériau de la canalisation ou enceinte (2) ;
e) l'enroulement du profilé flexible se fait en chauffant ledit profilé (9) de façon à faire fondre sensiblement dans toute sa masse le matériau de la matrice du profilé (9) juste avant que ce dernier ne soit appliqué sur ladite paroi périphérique ou sur une couche précédemment déposée dudit profilé, et en refroidissant immédiatement ledit profilé dès son application pour resolidifier ladite matrice, et on constitue ainsi des couches homogènes sur toute la surface dudit tronçon ;
f) le nombre de couches du profilé superposées en un même endroit ainsi que les angles et la tension d'enroulement du profilé (9) étant suffisants pour précontraindre à la fois radialement et longitudinalement le matériau de la canalisation ou enceinte (2) et pour redonner ainsi audit tronçon de la canalisation ou enceinte des caractéristiques mécaniques prédéterminées ;
g) on procède à l'enroulement de façon que la précontrainte exercée sur le matériau de la canalisation ou enceinte (2) diminue progressivement à partir d'un endroit prédéterminé quand on s'éloigne dudit tronçon réparé ou restauré de part et d'autre de celui-ci, en diminuant progressivement à cet effet la tension et éventuellement le nombre de couches du profilé.

2. Procédé conforme à la revendication 1, **caractérisé en ce que** dans un mouvement de va-et-vient, on diminue progressivement la tension du profilé à chaque aller ou retour au fur et à mesure que l'on s'éloigne du tronçon restauré ou réparé.

3. Procédé conforme à la revendication 1 ou 2 , **caractérisé en ce que** le matériau d'obturation déborde radialement vers l'extérieur par rapport à la surface périphérique extérieure de la canalisation ou enceinte (2).

4. Procédé conforme à l'une des revendications 1 à 3, **caractérisé en ce qu'**on presse le profilé (9) sur la paroi périphérique de la canalisation ou enceinte (2) dès qu'il a été appliqué sur ladite paroi ou sur une couche précédemment déposée dudit profilé.

5. Procédé conforme à l'une quelconque des revendications 1 à 4, **caractérisé en ce que** le nombre de couches du profilé superposées en un même endroit dudit tronçon ainsi que les angles et la tension d'enroulement du profilé sont suffisants pour que le matériau d'obturation et/ou le matériau dudit tronçon de la canalisation ou enceinte (2) soient précontraints lorsque la pression du fluide à l'intérieur de celle-ci est égale à la pression d'épreuve.

6. Procédé conforme à l'une des revendications 1 à 5, **caractérisé en ce que** l'on utilise un profilé flexible comportant une matrice en aluminium enrobant des fibres par exemple en acier.

7. Dispositif pour réparer ou restaurer sur place, selon le procédé conforme à l'une des revendications 1 à 6, un tronçon d'une canalisation ou enceinte (2) destinée à contenir ou contenant un fluide sous pression, ce dispositif comportant :
- un châssis (22, 49, 60) destiné à prendre appui sur la canalisation ou enceinte (2) et/ou sur le sol,
- des moyens (30, 31, 50, 51) pour fixer le châssis (22, 49, 60) sur la canalisation ou enceinte et/ou sur le sol, et le centrer par rapport à celle-ci,
- un équipage mobile (26, 58) étant mobile par rapport au châssis (22, 49, 60) et destiné à tourner autour de la canalisation ou enceinte (2) ;
- des moyens pour faire tourner ledit équipage mobile (26, 58) par rapport au châssis (22, 49, 60) autour de la canalisation ou enceinte (2), l'équipage mobile (26, 58) comportant des moyens d'amenée (7), mobiles axialement, pour amener une bande flexible, et des moyens pour déplacer lesdits moyens d'amenée (7) par rapport à ladite canalisation ou enceinte (2) afin d'enrouler la bande flexible, avec des angles de bobinage prédéterminés, autour de la canalisation ou enceinte (2) lorsque les moyens d'amenée (7) tournent autour de cette dernière ;
- des moyens (11, 12) de serrage et de freinage de la bande flexible (9) adaptés à régler la tension d'enroulement de celle-ci,
- des moyens d'appui adaptés à prendre appui sur la canalisation et/ou sur le sol pour compenser la force de réaction appliquée au dispositif du fait de l'enroulement sous tension de la bande flexible,
- des moyens pour régler individuellement la vitesse de rotation des moyens d'amenée (7) autour de la canalisation ou enceinte (2), la vitesse de déplacement axial desdits moyens d'amenée (7) et la tension d'enroulement de la bande flexible (9),
**caractérisé en ce que** le dispositif et tous ses moyens sont adaptés à utiliser comme bande flexible ledit profilé flexible (9) de très haute résistance mécanique longitudinale, et à enrouler sous tension ledit profilé (9) autour de la canalisation ou enceinte, et **en ce que** ledit dispositif comporte en outre des moyens pour chauffer ledit profilé (9) afin de faire fondre dans toute sa masse la matrice du profilé avant l'application dudit profilé, des moyens pour refroidir immédiatement ledit profilé dès son application afin de resolidifier ladite matrice, et des moyens pour permettre une diminution de la tension d'enroulement de la bande à chacune des extrémités de chaque segment de profilé déposé en hélice à chaque aller ou retour axial des moyens d'enroulement.

8. Dispositif conforme à la revendication 7, **caractérisé en ce que** les moyens pour faire tourner l'équipage mobile (26, 58) autour de la canalisation ou enceinte comprennent au moins un rail de guidage (27) présentant un bord en forme d'arc de cercle s'appuyant en même temps sur plusieurs galets (28) appartenant à un ensemble de galets (28) disposés autour de la canalisation ou enceinte (2), le rail de guidage (27) et l'ensemble de galets (28) étant solidaires respectivement soit du châssis (22, 49) soit des moyens d'amenée (7).

9. Dispositif conforme à la revendication 8, **caractérisé en ce que** ledit bord du rail de guidage (27) en forme d'arc de cercle est une crémaillère entraînée par des galets dentés (28).

10. Dispositif conforme à l'une des revendications 7 à 9, **caractérisé en ce qu'**il comporte des moyens (16, 39) pour presser le profilé (9) contre la paroi périphérique de la canalisation ou enceinte (2) juste après l'application dudit profilé sur ladite paroi ou sur une couche précédemment déposée dudit profilé (9).

11. Dispositif conforme à l'une des revendications 7 à 10, **caractérisé en ce que** l'équipage mobile (26, 58) qui est mobile par rapport au châssis (22, 49, 60), et qui est destiné à tourner autour de la canalisation ou enceinte (2), comporte au moins un chariot (36) portant un sous-ensemble d'enroulement (42) qui comprend à son tour les moyens (7) pour amener le profilé flexible (9).

12. Dispositif conforme à la revendication 11, **caractérisé en ce que** le sous-ensemble d'enroulement (42) est monté de manière à être mobile par rapport au chariot (36) suivant cinq mouvements possibles par rapport à trois axes.

13. Dispositif conforme à la revendication 11 ou 12, **caractérisé en ce que** le chariot (36) est mobile le long d'une glissière longitudinale (34, 59) de l'équipage mobile (26, 58), lequel comporte également des moyens (37, 38) pour déplacer le chariot (36) le long de cette glissière (34, 59).

14. Dispositif conforme à la revendication 13, **caractérisé en ce que** la glissière (59) est montée en porte-à-faux par rapport au châssis (49).

15. Dispositif conforme à l'une quelconque des revendications 7 à 14, **caractérisé en ce qu'**il comporte au moins deux équipages mobiles (26a, 26b) tournant dans des sens identiques ou opposés autour de la canalisation ou enceinte (2).

16. Dispositif conforme à l'une quelconque des revendications 7 à 15, **caractérisé en ce qu'**il comporte des moyens (44, 63) pour se déplacer longitudinalement le long de la canalisation ou enceinte (2).

## Patentansprüche

1. Verfahren zum vor Ort Ausbessern oder Reparieren eines Teilstücks einer Rohrleitung oder eines Behälters (2), der zum Enthalten eines unter Druck stehenden Fluids bestimmt ist, das die folgenden Schritte aufweist :
a) das vordere Ende (17) mindestens eines flexiblen Bandes (9) wird bezüglich der Außenumfangsfläche der Rohrleitung oder des Behälters (2) befestigt ;
b) um die Rohrleitung oder den Behälter (2) werden Mittel (7) zur Zufuhr des flexiblen Bandes (9) um die Rohrleitung oder den Behälter (2), nach einer Hin- und Herbewegung im Fall eines einzigen Bandes, von einem Ende des Teilstücks zum anderen und bei Bedarf darüber hinaus gedreht und axial daran verschoben, um das Band (9) um die Rohrleitung oder den Behälter (2) zu wickeln, und das Band (9) wird unter Spannung nach aufeinanderfolgenden Schraubenlilien mit vorbestimmten Wickelwinkeln am Ort und in der Nachbarschaft des Teilstücks und beiderseits davon um die Rohrleitung oder den Behälter (2) gewickelt,
**dadurch gekennzeichnet, daß** es ferner die folgenden Schritte aufweist :
c) gegebenenfalls wird jede mögliche Fehlerstelle (1) des Teilstücks mittels eines Verschlußmittels verschlossen ;
d) als flexibles Band wird ein flexibles Profilband (9) mit sehr hoher mechanischer Längsfestigkeit verwendet, das aus kontinuierlichen Längsfasern gebildet ist, die im Querschnitt 30 bis 60% des Querschnitts des Profilbandes darstellen, in eine Metallmatrix oder eine Thermoplastharzmatrix eingebettet sind und deren Elastizitätsgrenze über derjenigen des Materials der Rohrleitung oder des Behälters (2) liegt ;
e) wobei das flexible Profilband aufgewickelt wird, indem das Profilband (9) derart erhitzt wird, daß das Material der Matrix des Profilbandes (9) im wesentlichen in seiner gesamten Masse knapp vor dem Auflegen auf die Umfangswand oder eine vorher aufgebrachte Schicht des Profilbandes schmilzt, und indem das Profilband bei seinem Aufbringen zum Wiederverfestigen der Matrix sofort abgekühlt wird, und damit werden auf der gesamten Oberfläche des Teilstücks homogene Schichten gebildet ;
f) wobei die Zahl der an ein und demselben Ort übereinandergelegten Schichten sowie die Winkel und die Wickelspannung des Profilbandes (9) ausreichen, um das Material der Rohrleitung oder des Behälters (2) radial sowie in Längsrichtung vorzuspannen und damit dem Teilstück der Rohrleitung oder des Behälters (2) vorbestimmte mechanische Eigenschaften zu verleihen ;
g) die Wicklung derart durchgeführt wird, daß die auf das Material der Rohrleitung oder des Behälters (2) ausgeübte Vorspannung ausgehend von einem vorbestimmten Ort fortschreitend an beiden Seiten allmählig abnimmt, wenn man sich von dem ausgebesserten oder reparierten Teilstück entfernt, wobei die Wickelspannung und unter Umständen die Zahl der Schichten des Profilbandes zu diesen Zweck allmählig abgenommen werden.

2. Verfahren nach Anspruch 1, **dadurch gekennzeichnet, daß** in einer Hin- und Herbewegung die Wickelspannung des Profilbandes bei jedem Hin- oder Herweg je nachdem man sich von dem ausgebesserten oder reparierten Teilstück entfernt allmählig abgenommen wird.

3. Verfahren nach einem der Ansprüche 1 oder 2, **dadurch gekennzeichnet, daß** das Verschlußmaterial bezüglich der äußeren Umfangsfläche der Rohrleitung oder des Behälters (2) radial nach außen übersteht.

4. Verfahren nach einem der Ansprüche 1 bis 3, **dadurch gekennzeichnet, daß** das Profilband (9) auf die Umfangswand der Rohrleitung oder des Behälters (2) gedrückt wird, sobald es auf die Wand oder auf eine vorher aufgebrachte Schicht des Profilbandes aufgebracht wurde.

5. Verfahren nach einem der Ansprüche 1 bis 4, **dadurch gekennzeichnet, daß** die Zahl der an der gleichen Stelle des Teilstücks übereinandergelegten Schichten des Profilbandes sowie die Wickelwinkel und die Wickelspannung des Profilbandes ausreichen, damit das Verschlußmaterial und/oder das Material des Teilstücks der Rohrleitung oder des Behälters (2) vorgespannt sind, wenn der Druck des Fluids im Inneren gleich dem Prüfdruck ist.

6. Verfahren nach einem der Ansprüche 1 bis 5, **dadurch gekennzeichnet, daß** ein flexibles Profil mit einer Matrix aus Aluminium verwendet wird, die beispielsweise Fasern aus Stahl einbettet.

7. Vorrichtung zum vor Ort Ausbessern oder Reparieren eines Teilstücks einer Rohrleitung oder eines Behälters (2), der dazu bestimmt ist, ein unter Druck stehendes Fluid zu enthalten, oder ein solches enthält, nach dem Verfahren nach einem der Ansprüche 1 bis 5, wobei die Vorrichtung folgendes aufweist.
- ein Gestell (22, 49, 60) das zur Anlage an der Rohrleitung oder dem Behälter (2) und/oder am Boden bestimmt ist ;
- Mittel (30, 31, 50, 51), um das Gestell (22, 49, 60) an der Rohrleitung oder dem Behälter und/oder am Boden zu befestigen und dazu zu zentrieren ;
- wobei ein bewegliches Organ (26, 58) bezüglich des Gestells (22, 49, 60) beweglich ist und dazu bestimmt ist, sich um die Rohrleitung oder den Behälter (2) zu drehen ;
- Mittel zum Drehen des bewegliches Organs (26, 58) bezüglich des Gestells (22, 49, 60) um die Rohrleitung oder den Behälter (2), wobei das bewegliche Organ (26, 58) axial bewegliche Zufuhrmittel (7) zur Zufuhr eines flexibles Bandes aufweist, und Mittel zum Versetzem der Zufuhrmittel (7) bezüglich der Rohrleitung oder des Behälters (2) um das flexible Band mit vorbestimmten Wickelwinkeln um die Rohrleitung oder den Behälter (2) zu wickeln, wenn sich die Zufuhrmittel (7) darum drehen :
- Mittel (11, 12) zum Einklemmen und Bremsen des flexiblen Bandes (9), die zum Regeln der Wickelspannung geeignet sind ;
- Anlagemittel, die zur Anlage an der Rohrleitung und/oder dem Boden geeignet sind, um die Reaktionskraft zu kompensieren, die auf die Vorrichtung aufgebracht wird, da das flexible Band unter Spannung gewickelt wird ;
- Mittel zum individuellen Einstellen der Drehgeschwindigkeit der Zufuhrmittel (7) um die Rohrleitung oder den Behälster (2), der axialen Verschiebungsgeschwindigkeit der Zufuhrmittel (7) und der Wickelspannung des flexiblen Bandes (9) ;
**dadurch gekennzeichnet, daß** die Vorrichtung und alle ihre Mittel dazu geeignet sind, als flexibles Band das flexible Profilband (9) mit sehr hoher mechanischer Längsfestigkeit zu verwenden und das Profilband (9) unter Spannung um die Rohrleitung oder den Behälter zu wickeln, und daß die Vorrichtung ferner Mittel, um das Profilband (9) zu erhitzen, damit die Matrix des Profilbandes vor dem Aufbringen in ihrer gesamten Masse schmilzt, sowie Mittel aufweist, um das Profilband unmittelbar beim Auflegen abzukühlen, um die Matrix wieder zu verfestigen, und Mittel um eine Abnahme der Wickelspannung des Bandes an beiden Enden jedes Profilbandstückes, das in einer Schraubenlinie nach jeden axialen Hin- oder Herweg der Wickelmittel gewickelt wurde, zu ermöglichen.

8. Vorrichtung nach Ansprüch 7, **dadurch gekennzeichnet, daß** die Mittel zum Drehen des bewegliches Organs (26, 58) um die Rohrleitung oder den Behälter wenigstens eine Führungsschiene (27) aufweisen, die einen Rand zum in Form eines Kreisbogens aufweist, der gleichzeitig an mehreren Rädern (28) anliegt, die zu einer Einheit aus Rädern (28) gehören, die um die Rohrleitung oder den Behälter (2) angeordnet sind, wobei die Führungsschiene (27) bzw. die Einheit aus den Rädern (28) entweder mit dem Gestell (22, 49) oder mit den Führungsmitteln (7) fest verbunden ist.

9. Vorrichtung nach Ansprüch 8, **dadurch gekennzeichnet, daß** der Rand der Führungsschiene (27) in Form eines Kreisbogens eine Zahnstange ist, die durch Zahnräder (28) angetrieben wird.

10. Vorrichtung nach einem der Ansprüche 7 bis 9, **dadurch gekennzeichnet, daß** sie Mittel (16, 39) aufweist, um das Profilband (9) knapp nach dem Auflegen des Profilbandes an die Wand oder auf eine vorher aufgebrachte Schicht des Profilbandes (9) gegen die Umfangswand der Rohrleitung oder des Behälters (2) zu drücken.

11. Vorrichtung nach einem der Ansprüche 7 bis 10, **dadurch gekennzeichnet, daß** das bewegliche Organ (26, 58), das bezüglich des Gestells (22, 49, 60) beweglich ist und das zum Drehen um die Rohrleitung oder den Behälter (2) bestimmt ist, wenigstens einen Schlitten (36) aufweist, der eine Wickeluntereinheit (42) aufweist, die ihrerseits die Mittel (7) zum Zuführen des flexiblen Profilbandes (9) umfaßt.

12. Vorrichtung nach Anspruch 11, **dadurch gekennzeichnet, daß** die Wickeluntereinheit (42) derart angebracht ist, daß sie bezüglich des Schlittens (36) nach fünf möglichen Bewegungen bezüglich dreier Achsen beweglich ist.

13. Vorrichtung nach Anspruch 11 oder 12, **dadurch gekennzeichnet, daß** der Schlitten (36) entlang einer Längsgleitschiene (34, 59) des beweglichen Organs (26, 58) beweglich ist, das auch Mittel (37, 38) zum Verschieben des Schlittens (36) entlang dieser Gleitschiene (34, 59) aufweist.

14. Vorrichtung nach Anspruch 13, **dadurch gekennzeichnet, daß** die Gleitschiene (59) bezüglich des Gestells (49) freitragend angebracht ist.

15. Vorrichtung nach einem der Ansprüche 7 bis 14, **dadurch gekennzeichnet, daß** sie wenigstens zwei bewegliche Organe (26a, 26b) aufweist, die sich in gleichen oder in entgegengesetzten Richtungen um die Rohrleitung oder den Behälter (2) drehen.

16. Vorrichtung nach einem der Ansprüche 7 bis 15, **dadurch gekennzeichnet, daß** sie Mittel (44, 63) aufweist, um sich entlang der Rohrleitung oder dem Behälter (2) in Längsrichtung zu verschieben.

## Claims

1. A method of in situ repair or restoration of a portion of a pipeline or chamber (2) adapted to contain a fluid under pressure, the method comprising the following steps :
a) the front end (17) of at least one flexible strip (9) is secured with respect to the outer peripheral surface of the pipeline or chamber (2),
b) means (7) for supplying the flexible strip (9) are rotated around the pipeline or chamber (2) and axially moved along it, in a reciprocating motion in case of one single strip, from one end of the portion to the other and beyond if necessary, in order to wind the strip (9) around the pipeline or chamber (2), and the strip (9) is wound under tension along successive helices at predetermined winding angles around the pipeline or chamber (2) at or near the portion on either side thereof,
**characterized in that** it also comprises the following steps :
c) if necessary, any possible defect (1) in the portion is blocked by a sealing material ;
d) the flexible strip used is a flexible section member (9) having very high longitudinal mechanical strength and comprising continuous longitudinal fibres making up 30 to 60% of the cross-section of the section member and embedded in a metal or thermoplastic resin matrix, the elastic limit of the strip being greater than that of the material forming the pipeline or chamber (2) ;
e) the flexible section member is wound while heating the section member (9) so as to melt the matrix material of the section member (9) substantially all the way through, just before the section member is deposited on the peripheral wall or on a previously-deposited layer of the section member, and by cooling the section member immediately after deposition in order to re-solidify the matrix, thus forming homogeneous layers over the entire surface of the portion ;
f) the number of layers of section member superposed at a given place and the winding angles and tension of the section member (9) are sufficient to prestress the material of the pipeline or chamber (2) both radially and longitudinally and thus to give predetermined mechanical characteristics to the aforementioned portion of the pipeline or chamber (2) ;
g) the winding is made so that the prestress exerted on the material of the pipeline or chamber (2) progressively decreases from a predetermined place with increasing distance on either side of the repaired or restored portion, while progressively decreasing for this purpose the tension and possibly the number of layers of section member.

2. A method according to claim 1, **characterized in that** in a reciprocating motion the tension of the section member is progressively decreased at each one way or back movement with increasing distance from the repaired or restored portion.

3. A method according to claim 1 or 2, **characterized in that** the sealing material projects radially towards the exterior relatively to the outer peripheral surface of the pipeline or chamber (2).

4. A method according to any of claims 1 to 3, **characterized in that** the section member (9) is pressed against the peripheral wall of the pipeline or chamber (2) as soon as it has been deposited onto the wall or onto a previously-deposited layer of the section member.

5. A method according to any of claims 1 to 4, **characterized in that** the number of layers of section member superposed at a given place on the portion and the winding angles and tension of the section member are sufficient for the sealing material and/or the material of the portion of the pipeline or chamber (2) to be prestressed when the pressure of the fluid inside is equal to the test pressure.

6. A method according to any of claims 1 to 5, **characterized by** use of a flexible section member comprising an aluminium matrix embedding fibres, e.g. of steel.

7. A device for in situ repair or restoration by the method according to any of the claims 1 to 6 of a portion of a pipeline or chamber (2) containing or adapted to contain a fluid under pressure, the device comprising :
- a frame (22, 49, 60) adapted to bear on the pipeline or chamber (2) and/or on the ground,
- means (30, 31, 50, 51) for securing the frame (22, 49, 60) on the pipeline or chamber and/or on the ground and centre it with respect thereto,
- a mobile assembly (26, 58) being movable relatively to the frame (22, 49, 60) and adapted to rotate around the pipeline or chamber (2) ;
- means for rotating the mobile assembly (26, 58) relatively to the frame (22, 49,60) around the pipeline or chamber (2), the mobile assembly (26, 58) comprising axially movable supply means (7) for supplying a flexible strip, and means for moving the supply means (7) relatively to the pipeline or chamber (2) in order to wind the flexible strip at predetermined winding angles around the pipeline or chamber (2) when the supply means (7) are rotating around it ;
- means (11, 12) for clamping and braking the flexible strip (9) and adapted to control the winding tension thereof,
- bearing means adapted to bear on the pipeline and/or the ground in order to compensate the reaction force applied to the device when the flexible strip is wound under tension and
- means for individually adjusting the speed of rotation of the supply means (7) around the pipeline or chamber (2), the axial speed of the supply means (7) and the winding tension on the flexible strip (9),
**characterized in that** the device and all the means thereof are adapted to use a flexible strip in the form of the aforementioned flexible section member (9) having very high longitudinal mechanical strength, and to wind the section member (9) under tension around the pipeline or chamber, and **in that** the device also comprises means for heating the section member (9) in order to melt the matrix of the section member all the way through before the section member is deposited, means for cooling the section member immediately after deposition in order to re-solidify the matrix, and means for making it possible to decrease the winding tension of the strip at each end of each section member portion deposited in form of an helix at each one way or back axial movement of the winding means.

8. A device according to claim 7,
**characterized in that** the means for rotating the mobile assembly (26, 58) around the pipeline or chamber comprise at least one guide rail (27) having an edge in the shape of an arc of a circle bearing simultaneously on a number of rollers (28) belonging to a set of rollers (28) disposed around the pipeline or chamber (2), one of the guide rail (27) and the set of rollers (28) being secured to the frame (22, 49) and the other one to the supply means (7), respectively.

9. A device according to claim 8,
**characterized in that** the aforementioned edge of the guide rail (27) in the shape of an arc of a circle is a rack driven by toothed rollers (28).

10. A device according to any of claims 7 to 9, **characterized in that** it comprises means (16, 39) for pressing the section member (9) against the peripheral wall of the pipeline or chamber (2) immediately after the section member has been deposited onto the wall or onto a previously-deposited layer of the section member (9).

11. A device according to any of claims 7 to 10, **characterized in that** the movable assembly (26, 58) which is movable with respect to the frame (20, 49, 60) and which is adapted to rotate around the pipeline or chamber (2) comprises at least one carriage (36) bearing a winding sub-assembly (42) which in turn comprises the means (7) for supplying the flexible section member (9).

12. A device according to claim 11,
**characterized in that** the winding sub-assembly (42) is mounted so as to be movable with respect to the carriage (36) in accordance with five possible movements relative to three axes.

13. A device according to claim 11 or 12, **characterized in that** the carriage (36) is movable along a longitudinal slideway (34, 59) of the movable assembly (26, 58) which also comprises means (37, 38) for moving the carriage (36) along the slideway (34, 59).

14. A device according to claim 13,
**characterized in that** the slideway (59) is overhung relatively to the frame (49).

15. A device according to any of claims 7 to 14, **characterized in that** it comprises at least two movable assemblies (26a, 26b) rotating in identical or opposite directions around the pipeline or chamber (2).

16. A device according to any of claims 7 to 15, **characterized in that** it comprises means (44, 63) for moving longitudinally along the pipeline or chamber (2).
